# FASCICULE DE BREVET EUROPEEN

(11) **EP 2 094 542 B1**
(45) Date de publication et mention de la délivrance du brevet: **22.08.2018**
(21) Numéro de dépôt: 07847356.8
(22) Date de dépôt: 26.11.2007
(51) Int. Cl.: B60S 1/38

(54) **INDICATEUR D'USURE A ELEMENT DE PROTECTION SOLUBLE**
VERSCHLEISSINDIKATOR MIT LÖSLICHER SCHÜTZELEMENT
WEAR INDICATOR HAVING A SOLUBLE PROTECTIVE ELEMENT

(30) Priorité: 30.11.2006 FR 0610475
(43) Date de publication de la demande: 02.09.2009
(73) Titulaire: Valeo Systèmes d'Essuyage, 78322 Le Mesnil Saint Denis (FR)
(72) Inventeur: CERDAN, Jérôme, 63570 Beaulieu (FR); OULIE, Michel, 63610 Valbeleix (FR)
(74) Mandataire: Callu Danseux, Violaine
(86) Numéro de dépôt international: PCT/EP2007/062824
(87) Numéro de publication internationale: WO 2008/065082

(56) Documents cités:
- DE-A1- 4 322 200
- FR-A1- 2 753 943
- FR-A1- 2 787 076
- FR-A1- 2 843 083
- FR-A1- 2 860 470

## Description

L'invention propose un indicateur d'usure pour un balai d'essuie-glace, qui comporte un élément de protection amovible.

L'invention propose plus particulièrement un indicateur d'usure pour un balai d'essuie-glace qui comporte au moins un organe de vieillissement apte à changer d'aspect lorsque le balai a été utilisé pendant une période de temps déterminée, et des moyens amovibles de protection de l'organe de vieillissement qui recouvrent l'organe de vieillissement avant l'utilisation du balai et qui sont aptes à se détacher de l'organe de vieillissement au début de l'utilisation du balai.

Selon un mode de réalisation connu, l'indicateur d'usure comporte un élément de protection amovible consistant en un film adhésif que l'utilisateur doit retirer manuellement lors du montage du balai sur le mécanisme d'essuyage, pour exposer l'organe de vieillissement aux mêmes contraintes extérieures que la lame d'essuyage.

Cependant, il a été constaté qu'une grande partie des utilisateurs ne retirent pas l'élément de protection, généralement par ce que ces utilisateurs n'ont pas pu constater la présence de l'élément de protection.

Il a alors été proposé des éléments de protection de taille plus importante afin que ceux-ci soient plus visibles pour les utilisateurs.

Cependant, l'augmentation de la taille d'un élément de protection augmente son coût de réalisation, et impose que la taille de la zone du balai sur laquelle l'indicateur d'usure est monté, est suffisamment importante.

De plus cela ne permet pas de garantir que l'élément de protection sera assurément retiré de l'indicateur d'usure.

Il a aussi été proposer que l'élément de protection comporte une languette recouvrant une partie fonctionnelle du balai, par exemple une partie de liaison du balai à un bas d'entraînement, de sorte que l'utilisateur est obligé de retirer cette languette, et par conséquent l'élément de protection, pour pouvoir monter le balai sur le bras d'entraînement.

Cette solution permet de garantir le retrait de l'élément de protection, mais cela augmente la complexité du montage de l'élément de protection et le coût de réalisation de l'indicateur.

Le document FR 2 753 943 A montre un indicateur d'usure tel que décrit dans le préambule de la première revendication.

L'invention a pour but de proposer un indicateur d'usure pour lequel l'élément de protection est démonté dès la première utilisation du balai.

Dans ce but, l'invention propose un indicateur d'usure tel que décrit précédemment, caractérisé en ce que les moyens amovibles de protection sont réalisés dans un matériau soluble dans l'eau, de manière que les moyens de protection sont aptes être désagrégés à la première utilisation du balai.

Selon d'autres caractéristiques de l'invention, prises isolément ou en combinaison :
- les moyens amovibles de protection consistent en une couche d'encre protectrice qui recouvre l'organe de vieillissement ;
- l'organe de vieillissement comporte au moins une couche d'une encre apte à changer d'aspect lorsqu'elle a été soumise à une quantité déterminée d'ultraviolets qui est imprimée sur une face globalement horizontale du balai d'essuie-glace et en ce que l'encre protectrice est une encre non perméable aux ultraviolets ;
- l'organe de vieillissement consiste en une superposition globalement verticale de plusieurs couches d'encre sensible aux ultraviolets imprimées les unes sur les autres, et en ce que la couche d'encre protectrice est imprimée sur la couche supérieure de l'organe de vieillissement.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique d'un balai d'essuie-glace portant un indicateur d'usure selon l'invention ;
- la figure 2 est une section suivant un plan vertical transversal de l'indicateur d'usure représenté à la figure 1.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

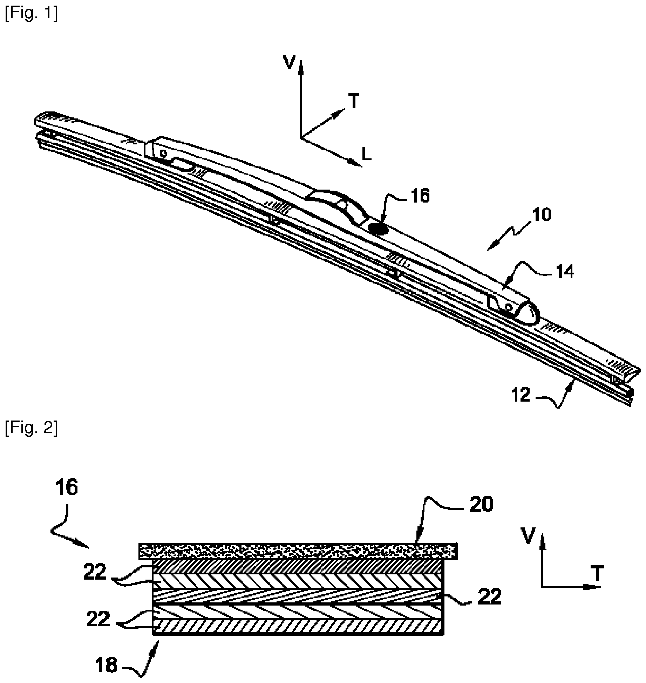

On a représenté à la figure 1 un balai d'essuie-glace 10 de type conventionnel, qui est notamment destiné à essuyer un panneau vitré de véhicule automobile. Ce balai 10 est un balai dit de "deuxième monte" qui est prévu pour remplacer un autre balai déjà monté sur le véhicule et qui est usé.

Le balai 10 comporte une lame d'essuyage 12 qui est destinée à venir en contact avec le panneau vitré à essuyer et une monture 14 de support de la lame 12, qui est ici une structure articulée, permettant de répartir l'effort de pression de la lame 12 sur toute sa longueur, et qui permet le montage du balai 10 à l'extrémité d'un bras d'entraînement (non représenté).

La monture de support 14 porte aussi un indicateur d'usure 16 représentatif de l'usure de la lame d'essuyage 12.

Comme on peut le voir plus en détails à la figure 2, l'indicateur d'usure 16 comporte un organe de vieillissement 18 qui est apte à changer d'aspect pour indiquer que la lame d'essuyage 12 est usée et qu'elle ne peut plus assurer un essuyage correct du panneau vitré.

Cet organe de vieillissement 18 est destiné à subir globalement les mêmes contraintes que la lame d'essuyage 12, pour que l'organe de vieillissement 18 vieillisse simultanément à la lame d'essuyage 12.

Lorsque la lame 12 est censée être trop usée pour permettre un essuyage efficace du panneau vitré, l'organe de vieillissement a vieilli de manière similaire, et il change d'aspect. Généralement, l'organe de vieillissement 18 change de couleur pour indiquer que la lame 12 est usée.

Comme on peut le voir à la figure 1, l'indicateur d'usure 16 est monté sur une partie supérieure de la monture de support 14, pour qu'il soit visible par l'utilisateur. Cependant, il sera compris que l'invention n'est pas limitée à cette disposition de l'indicateur d'usure 16, qui peut aussi être monté sur une face latérale de la monture de support 14, pour que l'indicateur d'usure 16 soit visible par un utilisateur, depuis l'intérieur de l'habitacle du véhicule sur lequel le balai 10 est monté.

Selon un mode de réalisation préféré, l'organe de vieillissement 18 est réalisé de manière à réagir aux rayonnements ultraviolets. En effet, la lame 12 est réalisée en un matériau élastomère qui se dégrade progressivement lorsqu'il est soumis à des rayonnements ultraviolets.

L'organe de vieillissement 18 est réalisé de manière à changer d'aspect lorsqu'il a été soumis à une quantité d'ultraviolets, qui est déterminée pour correspondre à un niveau l'usure de la lame 12.

Avant que le balai 10 ne soit monté sur le système d'essuyage, il est entreposé, ou bien il est mis à disposition de clients dans un rayonnage d'un magasin. L'indicateur d'usure 16 est alors exposé à des rayonnements ultraviolets, tandis que la lame 12 n'est pas utilisée.

L'indicateur d'usure 16 comporte aussi un élément de protection 20 qui recouvre l'organe de vieillissement 18 et qui est réalisé de manière que l'organe de vieillissement 18 ne soit pas soumis aux facteurs entraînant son vieillissement, ici les rayonnements ultraviolets.

A cet effet, puisque l'organe de vieillissement 18 réagit aux ultraviolets, l'élément de protection 20 est réalisé en un matériau opaque non perméable aux ultraviolets. Ainsi, tant que l'élément de protection 20 est présent sur l'indicateur d'usure 16, l'organe de vieillissement 18 n'est pas soumis aux rayonnements ultraviolets.

L'élément de protection 20 est en outre amovible, pour que l'organe de vieillissement 18 ne soit plus protégé lorsque le balai 10 a été monté à l'extrémité du bras d'entraînement.

Conformément à l'invention, l'élément de protection 20 est réalisé de manière que son détachement de l'organe de vieillissement 18 est réalisé dès la première utilisation du balai 10 pour l'essuyage du panneau vitré, en cas de pluie ou de projection de liquide.

Ainsi, le retrait de l'élément de protection 20 est effectué sans aucune action d'un utilisateur, ce qui permet d'assurer un retrait systématique de l'élément de protection 20, pour que l'organe de vieillissement 18 subisse un vieillissement représentatif de l'usure de la lame 12 d'essuyage.

Selon l'invention l'élément de protection 20 est réalisé en un matériau soluble dans l'eau. Ainsi, la première fois que l'élément de protection 20 reçoit une projection d'eau, cette eau provoque la dissolution de l'élément de protection 20, de sorte que l'organe de vieillissement 18 est par la suite exposé aux rayonnements ultraviolets.

L'organe de vieillissement 18 est alors exposé aux ultraviolets de manière similaire à la lame 12, pour refléter au mieux l'usure de la lame 12.

Comme on peut le voir à la figure 2, l'organe de vieillissement 18 consiste en une superposition verticale de plusieurs couches 22 d'une encre sensible aux ultraviolets, ici l'organe de vieillissement 18 comporte cinq couches 22 d'encre.

Ces couches d'encre 22 sont imprimées directement sur la monture 14 du balai 10 par un dispositif (non représenté) apte à imprimer successivement une pluralité de couches sur la monture 14 du balai 10.

Selon un autre aspect de l'invention, l'élément de protection 20 consiste en une couche d'encre qui est imprimée sur cette superposition de couches 22 formant l'organe de vieillissement 18. La couche d'encre formant l'élément de protection 20 est ainsi imprimée sur la couche 22 supérieure de l'organe de vieillissement 18.

Selon un mode de réalisation préféré, la couche d'encre formant l'élément de protection 20 est imprimée par le dispositif qui réalise l'impression des couches d'encre 22 formant l'organe de vieillissement 18. Cela permet de réduire la durée de réalisation de l'indicateur d'usure 16.

Selon l'invention, la couche d'encre 20 est opaque aux ultraviolets, et elle est soluble dans l'eau, pour protéger l'organe de vieillissement 18 lorsque le balai 10 est entreposé, et pour se détacher de l'organe de vieillissement, exposant l'organe de vieillissement 18 aux ultraviolets, lorsque le balai est monté sur le véhicule.

## Revendications

1. Indicateur d'usure (16) pour un balai (10) d'essuie-glace qui comporte au moins un organe de vieillissement (18) apte à changer d'aspect lorsque le balai (10) a été utilisé pendant une période de temps déterminée, et des moyens amovibles de protection (20) de l'organe de vieillissement (18) qui recouvrent l'organe de vieillissement (18) avant l'utilisation du balai (10) et qui sont aptes à se détacher de l'organe de vieillissement (18) au début de l'utilisation du balai (10), **caractérisé en ce que** les moyens amovibles de protection (20) sont réalisés dans un matériau soluble dans l'eau, de manière que les moyens de protection (20) sont aptes à être désagrégés à la première utilisation du balai (10).

2. Indicateur d'usure (16) selon la revendication précédente, **caractérisé en ce que** les moyens amovibles de protection (20) consistent en une couche d'encre protectrice qui recouvre l'organe de vieillissement (18).

3. Indicateur d'usure (16) selon la revendication précédente, **caractérisé en ce que** l'organe de vieillissement (18) comporte au moins une couche (22) d'une encre apte à changer d'aspect lorsqu'elle a été soumise à une quantité déterminée d'ultraviolets qui est imprimée sur une face globalement horizontale du balai (10) d'essuie-glace et **en ce que** l'encre protectrice (20) est une encre non perméable aux ultraviolets.

4. Indicateur d'usure (16) selon la revendication précédente, **caractérisé en ce que** l'organe de vieillissement (18) consiste en une superposition globalement verticale de plusieurs couches (22) d'encre sensible aux ultraviolets imprimées les unes sur les autres, et **en ce que** la couche d'encre protectrice (20) est imprimée sur la couche (22) supérieure de l'organe de vieillissement (18).

## Patentansprüche

1. Verschleißindikator (16) für ein Wischerblatt (10) eines Scheibenwischers, umfassend wenigstens ein Alterungsorgan (18), das sein Aussehen verändern kann, wenn das Wischerblatt (10) während eines vorbestimmten Zeitraums verwendet wurde, und abnehmbare Schutzmittel (20) des Alterungsorgans (18), die das Alterungsorgan (18) vor der Verwendung des Wischerblatts (10) bedecken und sich von dem Alterungsorgan (18) zu Beginn der Verwendung des Wischerblatts (10) lösen können, **dadurch gekennzeichnet, dass** die abnehmbaren Schutzmittel (20) aus einem wasserlöslichen Material hergestellt sind, so dass die Schutzmittel (20) bei der ersten Verwendung des Wischerblatts (10) zersetzt werden können.

2. Verschleißindikator (16) nach dem vorhergehenden Anspruch, **dadurch gekennzeichnet, dass** die abnehmbaren Schutzmittel (20) aus einer schützenden Tintenschicht bestehen, die das Alterungsorgan (18) bedeckt.

3. Verschleißindikator (16) nach dem vorhergehenden Anspruch, **dadurch gekennzeichnet, dass** das Alterungsorgan (18) wenigstens eine Schicht (22) aus einer Tinte umfasst, die ihr Aussehen verändern kann, wenn sie einer bestimmten Menge an Ultraviolettstrahlen ausgesetzt wurde, und die auf eine im Wesentlichen horizontale Fläche des Wischerblatts (10) des Scheibenwischers gedruckt ist, und dass die schützende Tinte (20) eine für Ultraviolettstrahlen undurchlässige Tinte ist.

4. Verschleißindikator (16) nach dem vorhergehenden Anspruch, **dadurch gekennzeichnet, dass** das Alterungsorgan (18) aus einer im Wesentlichen vertikalen Übereinanderlagerung mehrerer Schichten (22) aus gegenüber Ultraviolettstrahlen empfindlicher Tinte besteht, die übereinander gedruckt sind, und dass die schützende Tintenschicht (20) auf die obere Schicht (22) des Alterungsorgans (18) gedruckt ist.

## Claims

1. Wear indicator (16) for a windscreen wiper (10) which comprises at least one ageing member (18) able to change appearance when the wiper (10) has been used for a specified period of time, and removable protective means (20) for protecting the ageing member (18), which cover the ageing member (18) before the use of the wiper (10) and which are able to be detached from the ageing member (18) at the start of use of the wiper (10), **characterized in that** the removable protective means (20) are made of a water-soluble material such that the protective means (20) are able to be disintegrated upon the first use of the wiper (10).

2. Wear indicator (16) according to the preceding claim, **characterized in that** the removable protective means (20) consist of a protective ink layer which covers the ageing member (18).

3. Wear indicator (16) according to the preceding claim, **characterized in that** the ageing member (18) comprises at least one layer (22) of an ink which is able to change appearance when it has been subjected to a specified quantity of ultraviolet radiation and which is imprinted on a generally horizontal face of the windscreen wiper (10), and **in that** the protective ink (20) is an ink which is impermeable to ultraviolet radiation.

4. Wear indicator (16) according to the preceding claim, **characterized in that** the ageing member (18) consists of a generally vertical superposition of a plurality of ink layers (22) sensitive to ultraviolet radiation and imprinted on one another, and **in that** the protective ink layer (20) is imprinted on the upper layer (22) of the ageing member (18).
